# EUROPÄISCHE PATENTSCHRIFT

(11) **EP 2 210 151 B1**
(45) Veröffentlichungstag und Bekanntmachung des Hinweises auf die Patenterteilung: **23.07.2014**
(21) Anmeldenummer: 08849669.0
(22) Anmeldetag: 12.11.2008
(51) Int. Cl.: G05B 9/02, G05B 19/042

(54) **FELDGERÄT FÜR DIE BESTIMMUNG ODER ÜBERWACHUNG EINER PROZESSGRÖßE IN DER PROZESSAUTOMATISIERUNG**
FIELD DEVICE FOR DETERMINING OR MONITORING A PROCESS VARIABLE IN PROCESS AUTOMATION
APPAREIL DE CHAMP POUR DÉTERMINER OU SURVEILLER UNE VARIABLE DE PROCESSUS DANS L'AUTOMATISATION DES PROCESSUS

(30) Priorität: 14.11.2007 DE 102007054672
(43) Veröffentlichungstag der Anmeldung: 28.07.2010
(73) Patentinhaber: Endress+Hauser GmbH+Co. KG, 79689 Maulburg (DE)
(72) Erfinder: GRITTKE, Udo, 79585 Steinen (DE); FRÜHAUF, Dietmar, 79539 Lörrach (DE); HUMPERT, Axel, 77866 Reinau (DE); GIRARDEY, Romuald, F-68330 Huningue (FR)
(74) Vertreter: Andres, Angelika Maria
(86) Internationale Anmeldenummer: PCT/EP2008/065382
(87) Internationale Veröffentlichungsnummer: WO 2009/062954

(56) Entgegenhaltungen:
- WO-A-00/36492
- WO-A-2004/013585
- DE-U1- 20 010 739
- US-A- 5 757 641
- US-A1- 2007 152 709
- US-B1- 7 124 041

## Beschreibung

Die Erfindung betrifft ein Feldgerät zur Bestimmung oder Überwachung einer Prozessgröße in der Prozessautomatisierung, bestehend aus einem Sensor, der nach einem definierten Messprinzip arbeitet, und einer Kontroll-/Auswerte-einheit, die die vom Sensor gelieferten Messdaten in Abhängigkeit von einem in der jeweiligen sicherheitskritischen Anwendung geforderten Sicherheits-standard entlang von mindestens zwei gleichwertigen redundanten und /oder diversitären Messpfaden aufbereitet und auswertet. Eine entsprechende Lösung ist aus der WO 2004/013585 A1 bekannt geworden.

In der Automatisierungstechnik, insbesondere in der Prozessautomati-sierungstechnik, werden Feldgeräte eingesetzt, die zur Bestimmung und Überwachung von Prozessvariablen dienen. Beispiele für derartige Feldgeräte sind Füllstandsmessgeräte, Durchflussmessgeräte, Analysemessgeräte, Druck- und Temperaturmessgeräte, Feuchte- und Leitfähigkeitsmessgeräte, Dichte und Viskositätsmessgeräte. Die Sensoren dieser Feldgeräte erfassen die entsprechenden Prozessvariablen, z.B. den Füllstand, den Durchfluss, den pH-Wert, die Stoffkonzentration, den Druck, die Temperatur, die Feuchte, die Leitfähigkeit, die Dichte oder die Viskosität.

Unter den Begriff 'Feldgeräte' werden aber auch Aktoren, z. B. Ventile oder Pumpen, subsumiert, über die beispielsweise der Durchfluss einer Flüssigkeit in einer Rohrleitung oder der Füllstand in einem Behälter veränderbar ist. Eine Vielzahl solcher Feldgeräte wird von der Firmengruppe Endress + Hauser angeboten und vertrieben.

In der Regel sind Feldgeräte in modernen automatisierungstechnischen Anlagen über Kommunikationsnetzwerke, wie HART- Multidrop, Punkt zu Punkt Verbindung, Profibus, Foundation Fieldbus, mit einer übergeordneten Einheit verbunden, die als Leitsysteme oder Leitwarte bezeichnet wird. Diese übergeordnete Einheit dient zur Prozesssteuerung, zur Prozessvisualisierung, zur Prozessüberwachung sowie zur Inbetriebnahme und zum Bedienen der Feldgeräte. Für den Betrieb von Feldbussystemen notwendige Zusatz-komponenten, die direkt an einen Feldbus angeschlossen sind und die insbesondere zur Kommunikation mit den übergeordneten Einheiten dienen, werden ebenfalls häufig als Feldgeräte bezeichnet. Bei diesen Zusatz-komponenten handelt es sich z. B. um Remote I/Os, um Gateways, um Linking Devices oder um Controller.

Der Software-Anteil bei Feldgeräten steigt stetig an. Der Vorteil beim Einsatz von Mikrocontroller-gesteuerten Feldgeräten besteht darin, dass sich über anwendungsspezifische Softwareprogramme eine Vielzahl von unterschied-lichen Funktionalitäten in einem Feldgerät realisieren lassen; auch lassen sich Programmänderungen relativ einfach durchführen. Der hohen Flexibilität der programmgesteuerten Feldgeräte steht auf der anderen Seite als Folge der sequentiellen Programmabarbeitung eine relativ geringe Verarbeitungs-geschwindigkeit und damit eine entsprechend geringe Messrate entgegen.

Um die Verarbeitungsgeschwindigkeit zu erhöhen, werden immer dann, wenn es sinnvoll ist, in den Feldgeräten ASICs - Application Specific Integrated Circuits - eingesetzt. Durch die anwendungsspezifische Konfiguration können diese Bausteine Daten und Signale wesentlich schneller verarbeiten, als dies ein Softwareprogramm tun kann. Insbesondere für rechenintensive Anwendungen sind ASICs hervorragend geeignet.

Nachteilig bei der Applikation von ASICs ist, dass die Funktionalität dieser Bausteine fest vorgegeben ist. Eine nachträgliche Änderung der Funktionalität ist bei diesen Bausteinen nicht ohne Weiteres möglich. Weiterhin zahlt sich der Einsatz von ASICs nur bei relativ großen Stückzahlen aus, da der Entwicklungsaufwand und die damit verbundenen Kosten hoch sind.

Um den Missstand der fest vorgegebenen Funktionalität zu umgehen, ist aus der WO 03/098154 ein konfigurierbares Feldgerät bekannt geworden, bei dem ein rekonfigurierbarer Logikbaustein in Form eines FPGAs vorgesehen ist. Bei dieser bekannten Lösung wird beim Systemstart der Logikbaustein mit mindestens einem Mikrocontroller, der auch als Embedded Controller bezeichnet wird, konfiguriert. Nachdem die Konfiguration abgeschlossen ist, wird die erforderliche Software in den Mikrocontroller geladen. Der hierbei benötigte rekonfigurierbare Logikbaustein muss über ausreichende Ressourcen, und zwar Logik-, Verdrahtungs- und Speicherressourcen, verfügen, um die gewünschten Funktionalitäten zu erfüllen. Logikbausteine mit vielen Ressourcen benötigen viel Energie, was wiederum aus funktioneller Sicht ihren Einsatz in der Prozessautomatisierung uneingeschränkt möglich macht. Nachteilig beim Einsatz von Logikbausteinen mit wenigen Ressourcen und somit mit einem geringeren Energieverbrauch ist die erhebliche Einschränkung in der Funktionalität des entsprechenden Feldgeräts.

US 2007 /152709 offenbart ein Sicherheitssystem, das als ein rekonfigurierbaren Array von Logischen Elementen (FPGA) ausgelegt ist. Die logischen Gattern sind so konfiguriert, dass eine vorgegebene Strategie für ein Notfall-Antwortsystem in einer Ausgestaltung geschaffen wird, wobei die Ausgestaltung ausschließlich Hardware umfasst.

Je nach Anwendungsfall müssen die Feldgeräte unterschiedlichsten Sicherheitsanforderungen genügen. Um den jeweiligen Sicherheits-anforderungen, z.B. dem SIL-Standard 'Security Integrity Level' zu genügen, müssen die Feldgeräte redundant und/oder diversitär ausgelegt sein.

Redundanz bedeutet erhöhte Sicherheit durch doppelte oder mehrfache Auslegung aller sicherheitsrelevanter Hard- und Software-Komponenten. Diversität bedeutet, dass die in den unterschiedlichen Messpfaden befindlichen Hardware-Komponenten, wie z.B. ein Mikroprozessor, von unterschiedlichen Herstellern stammen und/oder dass sie von unterschiedlichem Typ sind. Im Falle von Software-Komponenten erfordert die Diversität, dass die in den Mikroprozessoren gespeicherte Software aus unterschiedlichen Quellen, sprich von unterschiedlichen Herstellern bzw. Programmierern stammt. Durch alle diese Massnahmen soll sichergestellt werden, dass ein sicherheitskritischer Ausfall des Messgeräts ebenso wie das Auftreten von gleichzeitig auftretenden systematischen Fehlern bei der Messwertbereitstellung mit hoher Wahrscheinlichkeit ausgeschlossen ist. Auch ist es bekannt, zusätzlich auch noch einzelne wesentliche Hardware- und Software-Komponenten der Auswerteschaltung redundant und/oder diversitär auszulegen. Durch die redundante und diversitäre Auslegung einzelner von Hardware- und Software-Komponenten läßt der Grad der Sicherheit noch einmal erhöhen.

Ein Beispiel für eine sicherheitsrelevante Applikation ist die Füllstands-überwachung in einem Tank, in dem eine brennbare oder auch eine nicht brennbare, dafür aber wassergefährdene Flüssigkeit gelagert ist. Hier muss sichergestellt sein, dass die Zufuhr von Flüssigkeit zu dem Tank sofort unterbrochen wird, sobald ein maximal zulässiger Füllstand erreicht ist. Dies wiederum setzt voraus, daß das Messgerät hoch zuverlässig den Füllstand detektiert und fehlerfrei arbeitet.

Der Erfindung liegt die Aufgabe zugrunde, ein Feldgerät vorzuschlagen, das einfach und mit hoher Flexibilität an einen geforderten Sicherheitsstandard anpassbar ist.

Die Aufgabe wird dadurch gelöst, dass die Kontroll-/Auswerteeinheit zumindest teilweise als rekonfigurierbarer Logikbaustein mit mehreren partiell dynamisch rekonfigurierbaren Funktionsmodulen gemäß des Gegenstandes des Anspruchs 1 ausgebildet ist, und dass die Kontroll-/Auswerteeinheit die Funktionsmodule in den Messpfaden in Abhängigkeit von der jeweils definierten sicherheitskritischen Anwendung so konfiguriert, dass das Feldgerät entsprechend dem geforderten Sicherheits-standard ausgelegt ist.

Ein großer Vorteil der erfindungsgemäßen Lösung der Aufgabe besteht darin, dass das Feldgerät einfach und mit einer hohen Flexibilität an die geforderten Sicherheitsstandard unter Berücksichtigung der geforderten Sicherheitsnormen anpasst werden kann und ein Ausfall zumindest einer sicherheitsrelevanten Komponente nicht zwangsläufig zu einem Totalausfall des gesamten Feldgeräts führt.

Gemäß einer bevorzugten Ausgestaltung des Feldgeräts wird vorgeschlagen, dass die Messpfade mit den partiell dynamisch rekonfigurierbaren Funktionsmodulen redundant, diversitär oder redundant und diversitär ausgelegt sind. Im Einzelfall richtet sich die Ausgestaltung nach dem jeweiligen Sicherheitsstandard, z.B. nach SIL1, SIL2, SIL3. Der Sicherheitsstandard erfordert beispielsweise eine redundante und eine diversitäre Auslegung der Hard- und Software-Komponenten. Dies bedeutet, dass die redundanten Komponenten von unterschiedlichen Herstellern bezogen werden, wodurch systematische Fehlfunktionen der Komponenten mit hoher Wahrscheinlichkeit ausgeschlossen werden können. Im Falle von Software bedeutet diversitär, dass die Programme von unterschiedlichen Programmierfirmen bzw. unterschiedlichen Programmierern erstellt werden. Auch hierdurch soll mit an Sicherheit grenzender Wahrscheinlichkeit die Eliminierung von systematischen Fehlern erzielt werden.

Gemäß einer vorteilhaften Ausgestaltung der Vorrichtung ist vorgesehen, dass der Kontroll-/Auswerteeinheit ein Voter zugeordnet ist, der die von oder in den Messpfaden zur Verfügung gestellten entsprechenden Daten miteinander vergleicht und im Falle einer Abweichung eine Warn- oder Fehlermeldung generiert. Bei dem Voter handelt es sich im einfachsten Fall um eine Entscheidungslogik. Selbstverständlich kann hier auch ein Mikrocontroller zum Einsatz kommen, der bevorzugt permanent auf dem FPGA konfiguriert ist.

Darüber hinaus ist vorgesehen, dass die Kontroll-/Auswerteeinheit seriell oder parallel die Funktionsmodule für eine ungeradzahlige Anzahl von redundanten und / oder diversitären Messpfaden partiell dynamisch rekonfiguriert, wobei die Kontroll-/Auswerteeinheit oder der Voter die von oder in den Messpfaden zur Verfügung gestellten Daten miteinander vergleicht, und wobei die Kontroll-/Auswerteeinheit eine Warnmeldung geniert, dass ein definierter Messpfad fehlerhafte Daten liefert, wenn auf dem definierten Messpfad Daten zur Verfügung gestellt werden, die von den Daten der verbleibenden Messpfade abweichen.

Bevorzugt rekonfiguriert die Kontroll-/Auswerteeinheit die einzelnen Funktionsmodulen oder die in einem Messpfad angeordnete Gruppen von Funktionsmodulen partiell dynamisch in einem definierten ersten Bereich des Logikbausteins. Weiterhin ist ein Mikrocontroller vorgesehen, der durch Vergleich der Daten einzelner Funktionsmodule oder Gruppen von Funktionsmodulen mit den Daten entsprechender redundanter oder diversitärer Funktionsmodule oder Gruppen von Funktionsmodulen ermittelt, ob das Funktionsmodul oder die Gruppe von Funktionsmodulen in dem ersten Bereich des Logikbausteins korrekt arbeitet oder fehlerhaft ist. Dieser Test kann auch mittels eines Testsignals erfolgen. Ein entsprechendes Verfahren ist in der nicht vorveröffentlichten DE 10 2006 047 262.4 beschrieben.

Gemäß einer Weiterbildung des Feldgeräts wird vorgeschlagen, dass die Kontroll-/Auswerteeinheit im Fall eines ermittelten Fehlers das fehlerhafte Funktionsmodul bzw. die fehlerhafte Gruppe von Funktionsmodulen erneut in dem ersten Bereich rekonfiguriert und die entsprechenden Daten miteinander vergleicht. Tritt nunmehr erneut ein Fehler auf, so rekonfiguriert die Kontroll-Auswerteeinheit ein diversitäres Funktionsmodul oder eine Gruppe von diversitären Funktionsmodulen in den entsprechenden ersten Bereich des Logikbausteins.

Beim abermaligen Auftreten eines Fehlers sperrt die Kontroll-/Auswerteeinheit nachfolgend den ersten Bereich des Logikbausteins und rekonfiguriert das entsprechende Funktionsmodul bzw. die entsprechende Gruppe von Funktionsmodulen in einem von dem ersten Bereich des Logikbausteins abweichenden zweiten Bereich des Logikbaustein; wiederum werden die entsprechenden Daten miteinander verglichen.

Erst wenn jetzt immer noch eine Fehlermeldung generiert wird, gibt die Kontroll-/Auswerteeinheit eine Meldung aus, dass das Funktionsmodul bzw. die Gruppe von Funktionsmodulen fehlerhaft arbeitet, und die Kontroll-/Auswerteeinheit rekonfiguriert einen redundanten und/oder diversitären Funktionsblock in dem zweiten Bereich.

Wie bereits an vorhergehender Stelle erwähnt, rekonfiguriert die Kontroll-/Auswerteeinheit in jedem der Messpfade hardware- und/oder software-basierte Funktionsmodule.

Eine bevorzugte Ausgestaltung des Feldgeräts sieht vor, dass dem Sensor eine analoge Sensorschaltung zur Ausgabe eines Roh-Messsignals zugeordnet ist, welches die zu bestimmende oder zu überwachende Prozessgröße repräsentiert. Die Kontroll-Auswerteeinheit weist insbesondere die folgenden Funktionsmodule auf:
- einen Analog-/Digital-Wandler, der das analoge Roh-Messsignal in ein digitales Roh-Messsignal umwandelt,
- eine Verarbeitungseinheit, die zur redundanten und/oder diversitären Auswertung des digitalen Roh-Messsignals dient, und
- ggf. eine Kommunikationsschaltung, die zur Weiterleitung des ausgewerteten Messsignals an eine übergeordnete Einheit dient.

Darüber hinaus ist vorgesehen, dass das Roh-Messsignal zusätzlich dem Voter zugeleitet wird; anhand eines Vergleichs der IST-Daten des Roh-Messsignals mit entsprechend abgespeicherten SOLL-Daten wird ermittelt, ob der Sensor korrekt oder fehlerhaft arbeitet.

Wie bereits zuvor erwähnt, ist es vorteilhaft, wenn ein Test-Mikroprozessor vorgesehen ist, der ein Testsignal oder ein Testmuster auf ein Funktionsmodul oder eine Gruppe von Funktionsmodulen gibt und durch einen Vergleich der IST-Antwortdaten auf das Testsignal oder das Testmuster mit entprechenden abgespeicherten SOLL-Antwortdaten die Funktion des Funktionsmoduls oder die Funktion der Gruppe von Funktionsmodulen überprüft. Mehr Inforamtion hierzu findet sich in der bereits erwähnten DE 10 2006 047 262.4.

Bevorzugt ist neben dem dynamischen Bereich ein statischer Bereich vorgesehen, in dem zumindest ein Funktionsmodul, z.B. eine Steuereinheit, in der das Steuerprogramm zu Konfigurierung der Funktionsmodule abläuft, permanent konfiguriert ist.

Wie bereits erwähnt, handelt es sich bei dem Logikbaustein um einen dynamisch partiell rekonfigurierbaren FPGA. Nähere Info zu dem partiell dynamisch rekonfigurierbaren FPGA findet sich in der nicht vorveröffentlichten PCT/EP2007/059440, die u.a. die Priorität der gleichfalls nicht vorveröffentlichten DE 10 2006 049 509.8 2 vom 17.10.2007 beansprucht.

Alternativ ist vorgesehen, dass es sich bei dem Logikbaustein um eine Vielzahl von Logikzellen in einer fest verdrahteten FPGA / Standard ASIC Struktur handelt, wobei die Logikzellen mittels Konfigurationsregistern so konfigurierbar sind, dass sie elementare Logikfunktionen ausführen. Weiterhin ist eine Verknüpfungsmatrix mit einer Vielzahl von Speicherzellen vorgesehen, über die unterschiedliche logische Verknüpfungen der Logikzellen in definierten komplexen Verknüpfungen mittels der Konfigurationsregister konfigurierbar sind. Weiterhin ist eine Steuereinheit vorgesehen, die die Logikzellen und die Verknüpfungsmatrix über einen internen Bus und über die Konfigurationsregister mittels eines Konfigurations-Bitstroms partiell dynamisch so konfiguriert, dass die fest verdrahtete FPGA / ASIC Struktur sich funktional wie ein partiell dynamisch rekonfigurierbarer Standard Logikbaustein verhält. Nähere Info zu dieser FPGA / ASIC Struktur findet sich in der nicht vorveröffentlichten PCT/EP2007/059442, die u.a. die Priorität der gleichfalls nicht vorveröffentlichten DE 10 2006 049 509.8 2 vom 17.10.2007 beansprucht.

Die Erfindung wird anhand der nachfolgenden Figuren näher erläutert. Es zeigt:
Fig. 1: ein Blockschaltbild eines redundant/diversitär ausgestalteten Druckmessgeräts des Standes der Technik, das einem vorgegebenen Sicherheitsstandard entspricht,
Fig. 2: ein Blockschaltbild eines partiell dynamisch rekonfigurierbaren Druckmessgeräts, das einem vorgegebenen Sicherheitsstandard entspricht,
Fig. 3a: eine erste diversitär analog/digital ausgestaltete Kontrolleinheit für sicherheitskritische Anwendungen,
Fig. 3b: eine zweite diversitär analog/digital ausgestaltete Kontrolleinheit für sicherheitskritische Anwendungen,
Fig. 4a: eine dritte Kontroll-/Auswerteeinheit mit dreifacher Redundanz,
Fig. 4b: eine vierte Kontroll-/Auswerteeinheit mit dreifacher Redundanz,
Fig. 5: eine Variante eines Feldgeräts mit fünffacher Redundanz bzw. Diversität der Kontroll-/Auswerteeinheit,
Fig. 6: ein Flussdiagramm eines Verfahrens zur Erkennung der Fehlerquelle bei einer ausgestalteten Kontroll-/Auswerteeinheit,
Fig. 7: eine alternative Ausgestaltung des Feldgeräts als Multisensor,
Fig. 8: eine bevorzugte Ausgestaltung des Feldgeräts mit einer Option zur Überprüfung der Funktionstüchtigkeit einzelner Funktionsmodule der Kontroll-/Auswerteeinheit und
Fig. 9: eine Ausgestaltung des Feldgeräts mit einer Option zur Überprüfung der Funktionstüchtigkeit des Sensors.

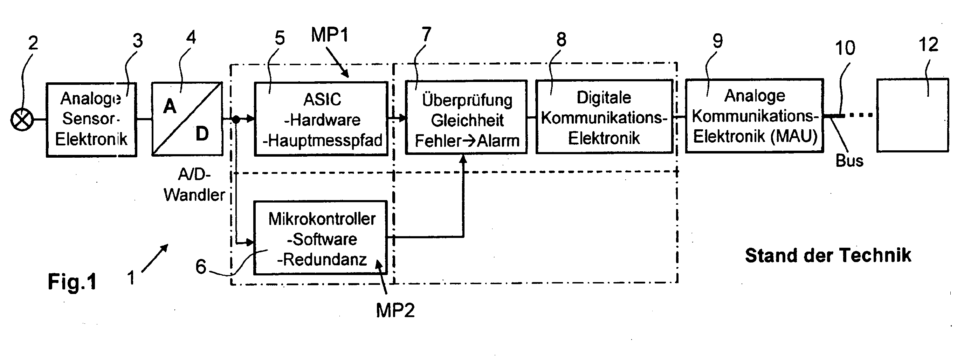

Fig. 1 zeigt ein Blockschaltbild eines redundant/diversitär ausgestalteten Druckmessgeräts, wie es aus dem Stand der Technik bekannt geworden ist. Bei Feldgeräten 1 die in sicherheitskritischen Anwendungen eingesetzt werden und die nach SIL - Safty Integrity Level - klassifiziert sind, ist eine unabhängige Überprüfung des jeweiligen Messergebnisses gefordert. Bisher wurden in Feldgeräten 1 hierfür zwei oder mehrere unterschiedliche Messpfade MP1, MP2 vorgesehen. Häufig wird dabei der Messwert hardwaremäßig in einem ersten Messpfad MP1 mit Hilfe eines ASICs 5 bestimmt. Zusätzlich wird der Messwert noch softwaremäßig in einem zweiten Messpfad MP2 mit einem auf einem Mikrocontroller 6 ablaufenden Programm bestimmt. Der mit dem Mikrocontroller 6 ermittelte diversitäre Messwert wird mit dem vom ASIC 5 ermittelten Messwert verglichen. Sind beide Messwerte innerhalb einer vorgegebenen Fehlertoleranz gleich - eine entsprechende Überprüfung erfolgt in dem Voter 7 -, so kann man davon ausgehen, dass das Feldgerät 1 einwandfrei arbeitet. Eine Abweichung wird stets als ein Indiz für eine Fehlfunktion gewertet. Bei Ungleichheit der beiden Messwerte wird folglich ein Alarm erzeugt, der über eine digitale Kommunikationselektronik 8, eine analoge Kommunikations-elektronik 9 und ein Bussystem 10 an eine übergeordnete Steuereinheit oder Leitwarte 12 weitergeleitet wird. Ein entsprechendes Feldgerät 1 zur Druckmessung wird von der Anmelderin unter der Bezeichnung Cerabar S Evolution angeboten und vertrieben.

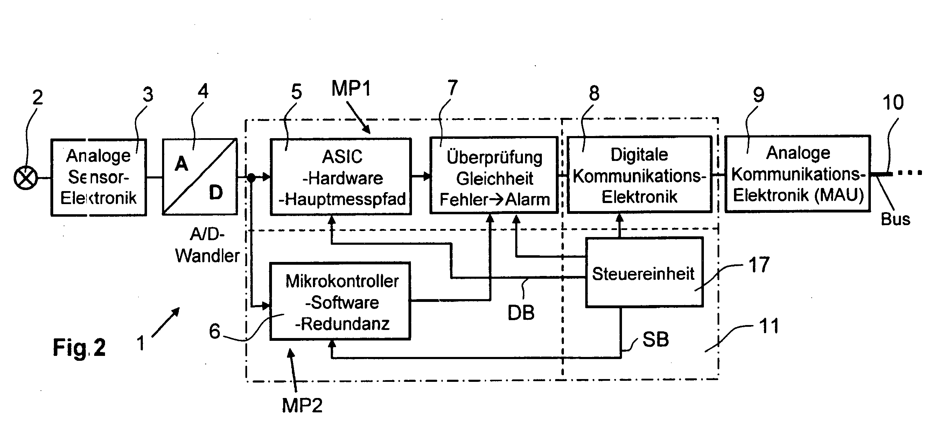

Das in Fig. 1 dargestellte Feldgerät 1 ist in Fig. 2 mit einem partiell dynamisch rekonfigurierbaren Logikbaustein 11 beschrieben. Das Feldgerät 1 arbeitet nach einem in der jeweiligen Applikation vorgeschriebenen SIL-Standard. Erfindungsgemäß werden in dem partiell dynamisch rekonfigurierbaren Bereich des FPGAs 11 die entsprechenden diversitären Funktionsmodule 5, 6 entweder seriell oder parallel konfiguriert. Dadurch lässt sich die Auswerteeinheit eine nicht SIL-fähiges Feldgerät für den SIL-Betrieb vorbereiten. Da zeitlich versetzt hard- oder softwaremäßige Funktionsmodule 5, 6 nacheinander auf derselben Fläche konfiguriert werden können, ist der Speicherbedarf in Bezug auf die bekannten Lösungen des Standes der Technik entsprechend gering. Neben dem zeitweisen Entfernen einzelner Funktionsmodule 5, 6, 7, 8 und dem Ersetzen durch andere Funktionsmodule 5', 6', 7', 8' ist es auch möglich, einzelne Funktionsmodule 5, 6, 7, 8 in ihrer Fläche zeitweise zu verringern, wobei die reduzierte Fläche letztlich von der spezifischen Anwendung des Feldgerätes 1 abhängt.

Partiell dynamisch rekonfigurierbare Logikbausteine 11 bieten verschiedene Alternativen für die für den SIL-Betrieb notwendigen Messpfade MP1, MP2, MP3, wobei in Fig. 2 die Alternative Hardware 5 / Software 6 dargestellt ist. Selbstverständlich können auch die Alternativen Hardware 5 / Hardware 5' oder Software 6 / Software 6' angewendet werden. Bei allen Alternativen mit zwei gleichwertigen Messpfaden MP1, MP2 - Hardware 5 / Hardware 5' bzw. Software 6 /Software 6' - können beide Gruppen von Funktionsmodulen sowohl redundant als auch diversitär ausgestaltet sein. Einzelne Beispiele sind anhand der nachfolgenden Figuren im Detail beschrieben.

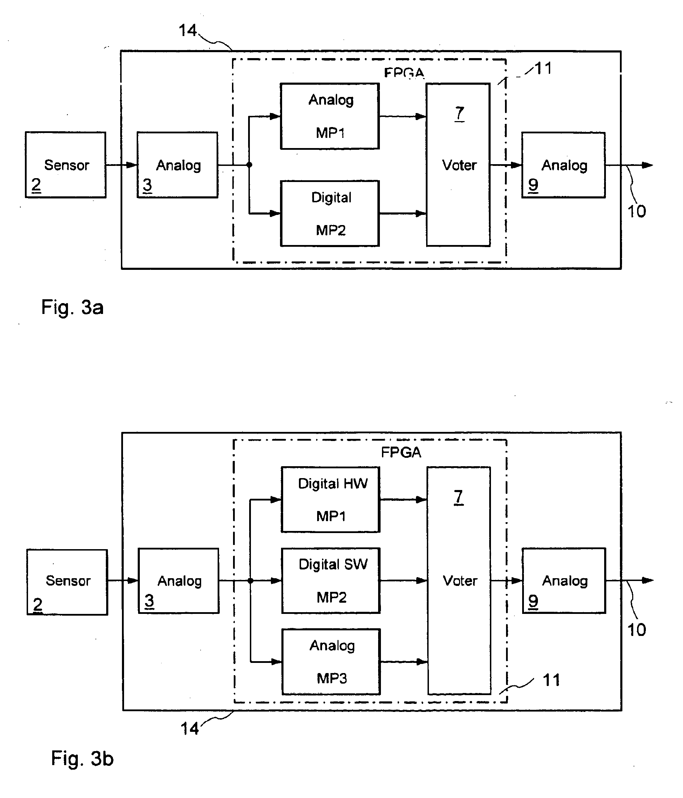

Fig. 3a und Fig. 3b zeigen zwei unterschiedliche diversitäre analog/digital ausgestaltete Kontroll-/Auswerteeinheiten 14 für sicherheitskritische Anwendungen. Während die in Fig. 3a gezeigte Ausgestaltung zweifach diversitär ist, ist die in Fig. 3b gezeigte Ausgestaltung dreifach diversitär ausgestaltet. Die für die jeweilige Applikation geeignete Ausgestaltung wird auf dem FPGA 11 erfindungsgemäß partiell dynamisch rekonfiguriert. Während bei der in Fig. 3 a gezeigten Ausgestaltung die analoge Sensorelektronik 3 und die analoge Kommunikationselektronik 9 auf dem FPGA 11 entsprechend den geforderten sicherheitskritischen Anwendungen partiell dynamisch rekonfiguriert werden, werden sie bei der in Fig. 3b gezeigten Ausgestaltung in zwei FPAA Bereichen 15 rekonfiguriert. Tritt zwischen den Messergebnissen in den verschiedenen Messpfaden MP1, MP2 bzw. MP1, MP2, MP3 eine Abweichung auf, so wird diese als Warn- oder Fehlermeldung über die Datenleitung, bei der es sich bevorzugt um einen Datenbus 10 handelt, an die Leitwarte 12 bzw. an das Bedienpersonal ausgeben.

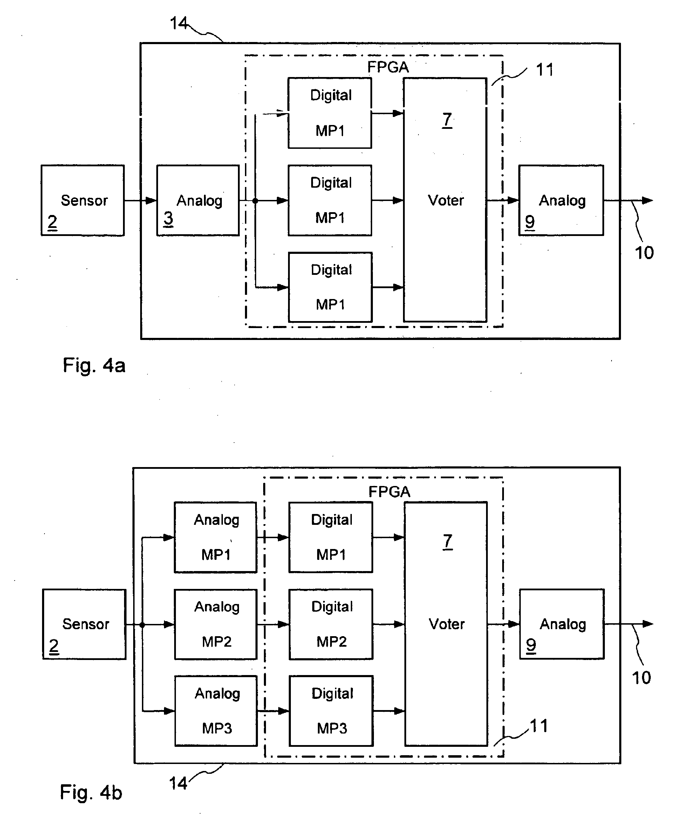

In den Figuren Fig. 4a und Fig. 4b ist jeweils eine Kontroll-/Auswerteeinheit 14 mit dreifacher Redundanz gezeigt. Während bei der in Fig. 4a gezeigten Lösung die dreifache Redundanz nur für die digitalen Funktionsmodule der Köntroll-/Auswerteeinheit 14 ausgeführt ist, betrifft die dreifache Redundanz bei der in Fig. 4b gezeigten Ausgestaltung auch die analogen sensorseitigen Funktionsmodule.

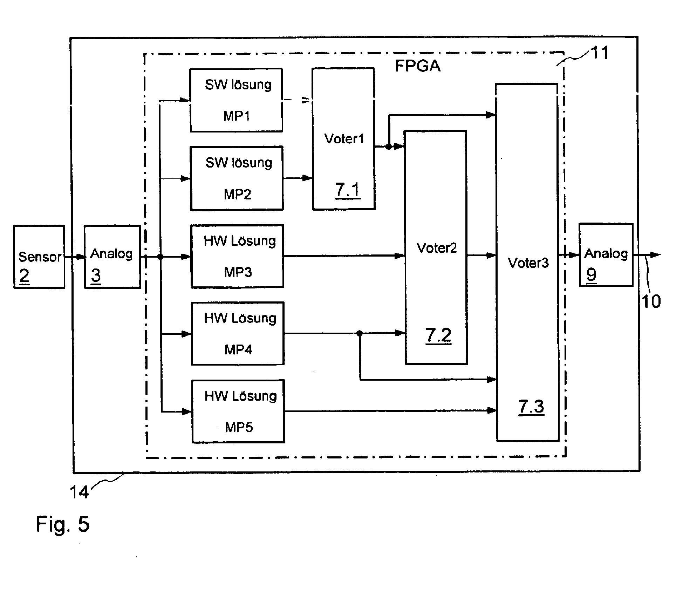

In Fig. 5 ist beispielhaft eine erste Kontroll-/Auswerte-einheit 14 mit dreifacher Redundanz gezeigt, die höchsten Sicherheitsanforderungen genügt. Beispielhaft sei an dieser Stelle der Einsatz eines Sensors 2 in einem Hochsicherheitsbereich eines Atomkraftwerks genannt. Es versteht sich von selbst, dass auch die komplette Messstelle, bestehend aus dem Sensor 2 und der als redundante, diversitäre Toolkette ausgelegten Kontroll-/Auswerteeinheit 14 wiederum ihrerseits redundant ausgelegt sein kann.

Partiell dynamisch rekonfiguriert werden auf dem FPGA 11 in dem ersten und dem zweiten Messpfad MP1, MP2 jeweils die Funktionsmodule für eine digitale bzw. eine Software-Lösung. Beide Messpfade MP1, MP2 sind redundant oder diversitär ausgestaltet. Der Vergleich zwischen den Messergebnissen, die in den Messpfaden MP1, MP2 ermittelt werden, erfolgt in dem Voter 7.1.

Seriell oder parallel werden auf dem FPGA 11 in dem dritten und vierten Messpfad MP3, MP4 jeweils die Funktionsmodule für eine analoge oder Hardware-Lösung partiell dynamisch rekonfiguriert. Wiederum sind beide Messpfade MP3, MP4 redundant oder diversitär ausgestaltet. Der Vergleich zwischen den Messergebnissen, die in den Messpfaden MP3, MP4 ermittelt werden, erfolgt in dem Voter 7.2. Darüber hinaus wird das von dem Voter 7.1 ermittelte Ergebnis jeweils mit den Messergebnissen aus den Messpfaden MP3, MP4 verglichen. Zuständig hierfür ist der Voter 7.2. Hierdurch kann im Falle einer Warn- oder Fehlermeldung eine Entscheidung getroffen werden, in welchem Messpfad das fehlerbehaftet Messergebnis aufgetreten ist.

In einem weiteren Schritt werden dem Voter 7.3 das Messergebnis des Voters 7.1, das Messergebnis des Voters 7.2 sowie die Messergebnisse aus den Messpfaden MP4, MP5 zugeführt. Durch diese kaskadenförmige Votierung der Messergebnisse aus den einzelnen Messpfaden MP1, MP2, MP3, MP4, MP5 lässt sich im Falle einer Fehlermeldung bestimmen, welcher der redundanten oder diversitären Messpfade MP1, MP2, MP3, MP4, MP5 fehlerhaft arbeitet.

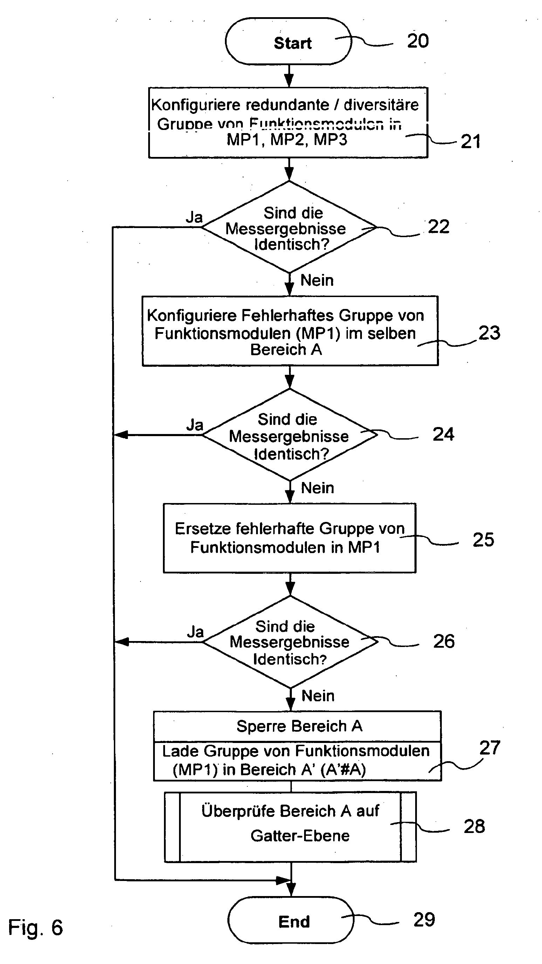

Eine Abweichung kann nun dadurch verursacht werden, dass eine Gruppe von Funktionsmodulen fehlerhaft arbeitet oder dass der entsprechende Speicherbereich des FPGAs 11 fehlerbehaftet ist. Ein Verfahren, das hier die Möglichkeit zu einer sicheren Unterscheidung bietet, ist anhand des Flußdiagramms in Fig. 6 skizziert. Fig. 6 zeigt übrigens eine 3-fach redundante Rekonfiguration der Messpfade MP1, MP2, MP3.

Nach dem Systemstart bei Programmpunkt 20 wird unter Programmpunkt 21 seriell oder parallel eine geeignete Gruppe von Funktionsmodulen in drei Messpfaden MP1, MP2, MP3 partiell dynamisch rekonfiguriert. Unter Programmpunkt 22 wird überprüft, ob die Messergebnisse, die von den drei Messpfaden MP1, MP2, MP3 geliefert werden, identisch sind oder ob sie voneinander abweichen. Üblicherweise erfolgt die Überprüfung mittels eines Voters 7. Sind die Messergebnisse innerhalb vorgegebener Toleranzgrenzen gleich, springt das Programm zum Endpunkt 29 des Programms.

Meldet der Voter 22 bei Programmpunkt 22 eine fehlerhafte Funktion eines der drei Gruppen von Funktionsmodulen in den Messpfaden MP1, MP2, MP3, so werden die Funktionsmodule in dem als fehlerhaft erkannten Messpfad, z.B. dem Messpfad MP1, erneut in demselben Speicherbereich A des FPGAs 11 partiell dynamisch rekonfiguriert.

Zeigt der Voter 7 erneut an, dass der Messpfad MP1 fehlerhaft arbeitet, was unter dem Programmpunkt 24 überprüft wird, so wird die fehlerhaft arbeitende Gruppe von Funktionsmodulen durch eine diversitäre Lösung in demselben Speicherbereich A des partiell dynamisch rekonfigurierbaren FPGAs 11 rekonfiguriert. Liefert der Voter 7 nunmehr das Ergebnis, dass die Messergebnisse in den drei Messpfaden MP1, MP2, MP3 gleich sind, so springt das Programm zum Programmende bei 29.

Tritt hingegen immer noch eine Abweichung in den Messergebnissen der einzelnen Messpfade MP1, MP2, MP3 auf, so ist dies mit hoher Wahrscheinlichkeit ein Indiz dafür, dass der Speicherbereich A des FPGAs defekt ist. Als Gegenmaßnahme wird unter dem Programmpunkt 27 die erste Gruppe von Funktionsmodulen in einen neuen Speicherbereich A' partiell dynamisch rekonfiguriert; der Bereich A wird auf Gatter-Ebene überprüft. Zusätzlich wird optional eine Warnmeldung generiert, dass die erste Gruppe von Funktionsmodulen 3.1, 3.2, 3.3, 6.1, 6.2, 6.3 in dem Messpfad MP1 ausgetauscht werden sollte. Anschließend wird das Programm bei Punkt 29 beendet.

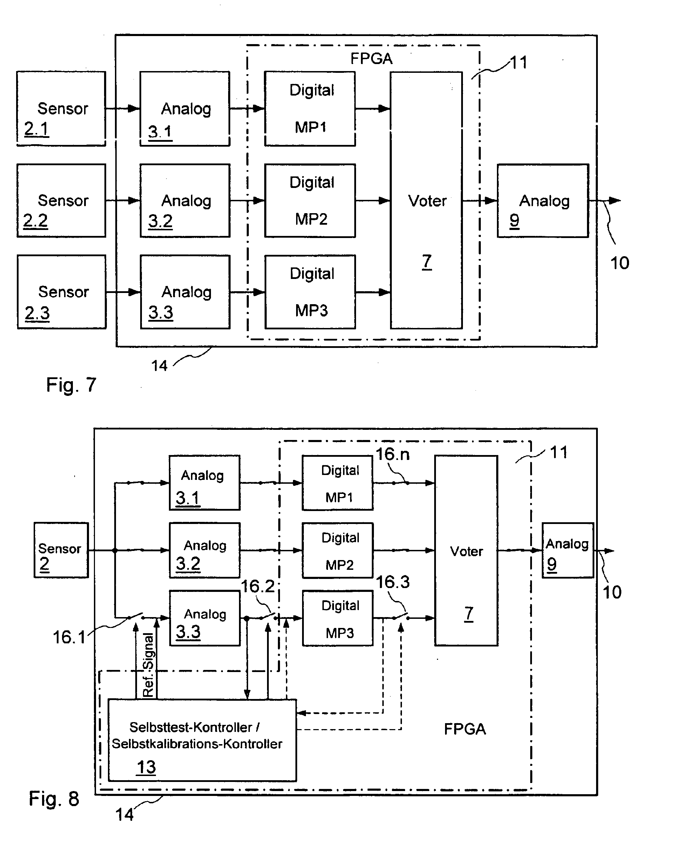

In Fig. 7 ist eine alternative Ausgestaltung des Feldgeräts 1 als Multisensor zu sehen. Bei dieser Ausgestaltung ist die Messstelle dreifach redundant und ggf. diversitär ausgelegt.

Fig. 8 zeigt eine bevorzugte Ausgestaltung des Feldgeräts 1 mit einer Option zur Überprüfung der Funktionstüchtigkeit einzelner Funktionsmodule 3.1, 3.2, 3.3, 6.1, 6.2, 6.3 der Kontroll-/Auswerteeinheit 14. Über Schalter 16.1, 16.2 wird ein definiertes Referenzsignal auf das entsprechende Funktionsmodul - hier die analoge Sensorelektronik 3.3 - gegeben. Hierzu wird bevorzugt ein Test-Mikroprozessor 13 partiell dynamisch rekonfiguriert. Ebenso kann es jedoch vorgesehen sein, dass der Test-Mikroprozessor 13 in einem permanent konfigurierten Bereich des FPGAs rekonfiguriert ist. Der Test-Mikroprozessor 13 gibt ein Referenzsignal oder ein Testmuster auf ein Funktionsmodul 3.3 oder alternativ auf eine Gruppe von Funktionsmodulen; durch einen Vergleich der IST-Antwortdaten auf das Testsignal oder das Testmuster mit entsprechenden abgespeicherten SOLL-Antwortdaten lässt sich die Funktion des Funktionsmoduls 3.3 oder die Funktion der Gruppe von Funktionsmodulen überprüfen. Die Entkopplung des zu überprüfenden Funktionsmoduls 3.1, 3.2 erfolgt über Schalter 16.1, 16.2. Mehr Information zu diesem Verfahren findet sich in der bereits erwähnten DE 10 2006 047 262.4. Der Inhalt dieser Patentanmeldung bezüglich des Testens einzelner Funktionsmodule 3.2 oder Gruppen von Funktionsmodulen ist explizit dem Offenbarungsgehalt der vorliegenden Patentanmeldung zuzurechnen.

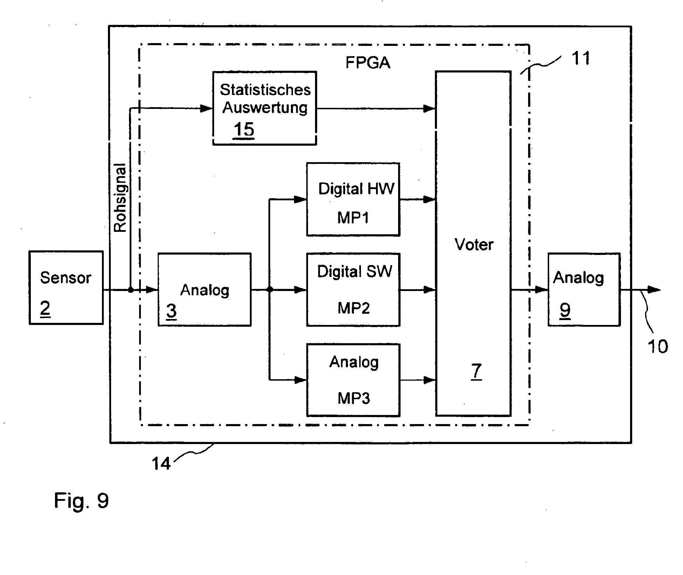

Fig. 9 zeigt eine Ausgestaltung des Feldgeräts 1, welches eine Option zur Überprüfung der Funktionstüchtigkeit des Sensors 2 aufweist. Hier wird zusätzlich zu den Messergebnissen in den drei Messpfaden MP1, MP2, MP3 das in der statistischen Auswerteeinheit 15 statistisch ausgewertet Rohsignal des Sensors 2 dem Voter 7 zugeführt. Mit dieser Ausgestaltung lässt sich überprüfen, ob einerseits in den Messpfaden MP1, MP2, MP3 der Kontroll-/Auswerteeinheit 14 und andererseits am Sensor 2 ein Fehler auftritt.

### Bezugszeichenliste

1 Feldgerät
2 Sensor
3 Analoge Sensorelektronik
4 A/D-Wandler
5 Funktionsmodul / ASIC
6 Funktionsmodul / Mikrocontroller
7 Funktionsmodul / Voter / Entscheidungslogik
8 Funktionsmodul / Digitale Kommunikationselektronik
9 Analoge Kommunikationselektronik
10 Datenbus
11 rekonfigurierbarer Logikbaustein, partiell dynamisch rekonfigurierbarer FPGA
12 Leitwarte / übergeordnete Steuereinheit
13 Test-Mikroprozessor / Selbsttest-Kontroller
14 Kontroll-/Auswerteeinheit
15 statistische Auswerteeinheit
16 Schalter
17 Steuereinheit

## Patentansprüche

1. Feldgerät (1) zur Bestimmung oder Überwachung einer Prozessgröße in der Prozessautomatisierung, bestehend aus einem Sensor (2), der nach einem definierten Messprinzip arbeitet, und einer Kontroll-/Auswerteeinheit (14), die die vom Sensor (2) gelieferten Messdaten in Abhängigkeit von einem in der jeweiligen sicherheitskritischen Anwendung geforderten Sicherheitsstandard entlang von mindestens drei gleichwertigen Messpfaden (MP1, MP2, MP3) aufbereitet und auswertet,
wobei die Messpfade (MP1, MP2, MP3) mit dynamisch rekonfigurierbaren Funktionsmodulen (5, 6) redundant, diversitär oder redundant und diversitär ausgelegt sind, wobei die Kontroll-/Auswerteeinheit (14) zumindest teilweise als rekonfigurierbarer Logikbaustein (11) mit mehreren partiell dynamisch rekonfigurierbaren Funktionsmodulen (5, 6) ausgebildet ist, wobei die Kontroll-/Auswerteeinheit (14) die Funktionsmodule (5, 6) in den Messpfaden (MP1, MP2, MP3) in Abhängigkeit von der jeweils definierten sicherheitskritischen Anwendung so konfiguriert, dass das Feldgerät (1) entsprechend dem geforderten Sicherheitsstandard ausgelegt ist, wobei die Kontroll-/Auswerteeinheit (14) seriell oder parallel die Funktionsmodule (5, 6) für eine ungeradzahlige Anzahl von redundanten und/oder diversitären oder redundanten und diversitären Messpfaden (MP1, MP2, MP3) partiell dynamisch bzw. dynamisch rekonfiguriert, wobei die Kontroll-/Auswerteeinheit (14) in jedem der Messpfade (MP1, MP2, MP3) digital-hardware- und/oder analog-hardware und/oder softwarebasierte Funktionsmodule (5, 6) rekonfiguriert, wobei zumindest einer der Messpfade mit zumindest einem analogen Funktionsmodul ausgestattet ist, das als dynamisch rekonfigurierbarer FPAA ausgelegt ist,
wobei die Kontroll-/Auswerteeinheit (14) die von oder in den Messpfaden (MP1, MP2, MP3) zur Verfügung gestellten Daten miteinander vergleicht,
und wobei die Kontroll-/Auswerteeinheit (14) eine Warnmmeldung geniert, dass ein definierter Messpfad (MP1) fehlerhafte Daten liefert, wenn auf dem definierten Messpfad (MP1) Daten zur Verfügung gestellt werden, die von den Daten der verbleibenden Messpfade (MP2, MP3) abweichen.

2. Feldgerät nach Anspruch 1 oder 2,
wobei der Kontroll-/Auswerteeinheit (14) ein Voter (7) zugeordnet ist, der die von oder in den Messpfaden (MP1, MP2, MP3) zur Verfügung gestellten entsprechenden Daten miteinander vergleicht und im Falle einer Abweichung die Warn- oder Fehlermeldung generiert.

3. Feldgerät nach Anspruch 1 oder 2,
wobei die Kontroll-/Auswerteeinheit (14) die einzelnen Funktionsmodule (5, 6, 7, 8) oder in einem Messpfad (MP1, MP2, MP3) angeordnete Gruppen von Funktionsmodulen in einem definierten ersten Bereich des Logikbaustein (11) rekonfiguriert, und
wobei ein Mikrocontroller (13) vorgesehen ist, der durch Vergleich der Daten einzelner Funktionsmodule (5, 6) oder Gruppen von Funktionsmodulen mit entsprechenden redundanten oder diversitären Funktionsmodulen (5.1, 6.1) oder Gruppen von Funktionsmodulen ermittelt, ob das Funktionsmodul (5, 6) oder die Gruppe von Funktionsmodulen in dem ersten Bereich (A) des Logikbausteins korrekt arbeitet oder fehlerhaft ist.

4. Feldgerät nach Anspruch 3,
wobei die Kontroll-/Auswerteeinheit (14) im Fall eines ermittelten Fehlers das fehlerhafte Funktionsmodul (5, 6) bzw. die fehlerhafte Gruppe von Funktionsmodulen erneut in dem ersten Bereich (A) rekonfiguriert und die entsprechenden Daten miteinander vergleicht.

5. Feldgerät nach Anspruch 4,
wobei die Kontroll-/Auswerteeinheit (14) im Falle des erneuten Auftretens eines Fehlers ein diversitäres Funktionsmodul (5, 6) oder die Gruppe von diversitären Funktionsmodulen in den ersten Bereich (A) des Logikbausteins (11) lädt.

6. Feldgerät nach Anspruch 5,
wobei die Kontroll-/Auswerteeinheit (14) im Falle des abermaligen Auftretens eines Fehlers den ersten Bereich (A) des Logikbausteins (11) sperrt und das entsprechende Funktionsmodul (5, 6) bzw. die entsprechende Gruppe von Funktionsmodulen in einem von dem ersten Bereich (A) des Logikbausteins (11) abweichenden zweiten Bereich (A') des Logikbaustein (11) rekonfiguriert und die entsprechenden Daten miteinander vergleicht.

7. Feldgerät nach Anspruch 6,
wobei die Kontroll-/Auswerteeinheit (14) im Falle des wiederholten Auftretens eines Fehlers eine Meldung ausgibt, dass das Funktionsmodul (5, 6) bzw. die Gruppe von Funktionsmodulen fehlerhaft arbeitet und
wobei die Kontroll-/Auswerteeinheit (14) ein redundantes und/oder diversitäres Funktionsmodul (5', 6') in dem zweiten Bereich (A') rekonfiguriert.

8. Feldgerät nach Anspruch 1,
wobei dem Sensor (2) eine analoge Sensorschaltung (3) zur Ausgabe eines Roh-Messsignals zugeordnet ist, welches die zu bestimmende oder zu überwachende Prozessgröße repräsentiert, und
wobei die nachgeordnete Kontroll-Auswerteeinheit (14) folgende Funktionsmodule aufweist:
einen Analog-/Digital-Wandler (4), der das analoge Roh-Messsignal in ein digitales Roh-Messsignal umwandelt,
eine Verarbeitungseinheit (5, 6, 7), die zur redundanten und/oder diversitären Auswertung des digitalen Roh-Messsignals dient, und
ggf. eine Kommunikationsschaltung (8, 9), die zur Weiterleitung des ausgewerteten Messsignals an eine übergeordnete Steuereinheit (12) dient.

9. Feldgerät nach Anspruch 2 und 8,
wobei das Roh-Messsignal zusätzlich dem Voter (7) zugeleitet wird und
wobei anhand eines Vergleichs der IST-Daten des Roh-Messsignals mit entsprechend abgespeicherten SOLL-Daten ermittelt wird, ob der Sensor (2) korrekt oder fehlerhaft arbeitet.

10. Feldgerät nach einem oder mehreren der vorhergehenden Ansprüche, wobei ein Test-Mikroprozessor (13) vorgesehen ist, der ein Testsignal oder ein Testmuster auf ein Funktionsmodul (3.3) oder eine Gruppe von Funktionsmodulen gibt und durch einen Vergleich der IST-Antwortdaten auf das Testsignal oder das Testmuster mit entsprechenden abgespeicherten SOLL-Antwortdaten die Funktion des Funktionsmoduls (3.3) oder die Funktion der Gruppe von Funktionsmodulen überprüft.

11. Feldgerät nach einem oder mehreren der vorhergehenden Ansprüche, wobei in einem statischen (SB) Bereich zumindest ein Funktionsmodul, z.B. eine Steuereinheit (17), in der das Steuerprogramm zu Konfigurierung der Funktionsmodule abläuft, permanent konfiguriert ist.

12. Feldgerät nach einem oder mehreren der Ansprüche 1, 3, 5 und 6, wobei es sich bei dem Logikbaustein (11) um einen dynamisch partiell rekonfigurierbaren FPGA für die digitalen Funktionsmodule (5, 6, 7, 8) und/oder um einen dynamisch rekonfigurierbaren FPAA für die analogen Funktionsmodule handelt.

13. Feldgerät nach einem oder mehreren der Ansprüche 1, 3, 5, 6 und 12,
wobei der Logikbaustein (11) eine Vielzahl von Logikzellen in einer fest verdrahteten FPGA / Standard ASIC Struktur aufweist, wobei die Logikzellen mittels Konfigurationsregistern so konfigurierbar sind, dass sie elementare Logikfunktionen ausführen,
wobei eine Verknüpfungsmatrix mit einer Vielzahl von Speicherzellen vorgesehen ist, über die unterschiedliche logische Verknüpfungen der Logikzellen in definierten komplexen Verknüpfungen mittels der Konfigurationsregister konfigurierbar sind, und
wobei eine zweite Steuereinheit vorgesehen ist, die die Logikzellen und die Verknüpfungsmatrix über einen internen Bus und über die Konfigurationsregister mittels eines Konfigurations-Bitstrom partiell dynamisch so konfiguriert, dass die fest verdrahtete FPGA / ASIC Struktur sich funktional wie ein partiell dynamisch rekonfigurierbarer Standard Logikbaustein verhält.

## Claims

1. Field device (1) designed for determining and/or monitoring a process variable in process engineering, consisting of a sensor (2) which works according to a defined measuring principle, and a control/evaluation unit (14) which prepares and evaluates measured data supplied by the sensor (1) as a function of a safety standard required in the individual safety-critical application along at least three equivalent measuring paths (MP1, MP2, MP3),
wherein the measuring paths (MP1, MP2, MP3) are designed with dynamically reconfigurable function modules (5, 6) in a manner that is redundant, diverse or redundant and diverse, wherein the control/evaluation unit (14) is designed at least in part as a reconfigurable logic module (11) with several partially dynamically reconfigurable function modules (5, 6), wherein the control/evaluation unit (14) configures the function modules (5, 6) in the measuring paths (MP1, MP2, MP3) as a function of the defined safety-critical application in such a way that the field device (1) is designed in accordance with the safety standard required, wherein the control/evaluation unit (14) reconfigures in series or in parallel the function modules (5, 6) for an uneven number of redundant and/or diverse or redundant and diverse measuring paths (MP1, MP2, MP3) partially dynamically or dynamically, wherein in each of the measuring paths (MP1, MP2, MP3) the control/evaluation unit (14) reconfigures function modules (5, 6) that are digital hardware based and/or analog hardware based and/or software based, wherein at least one of the measuring paths is fitted with at least one analog function module which is designed as a dynamically reconfigurable FPAA,
wherein the control/evaluation unit (14) compares the data supplied by or in the measuring paths (MP1, MP2, MP3) with one another,
and wherein the control/evaluation unit (14) generates a warning message signaling that a defined measuring path (MP1) delivers faulty data if data are made available on the defined measuring path (MP1) which are different from the data of the remaining measuring paths (MP2, MP3).

2. Field device as claimed in Claim 1 or 2,
wherein the control/evaluation unit (14) is assigned a voter (7) that compares the data supplied by or in the measuring paths (MP1, MP2, MP3) with one another and generates the warning or error message if the data deviate from one another.

3. Field device as claimed in Claim 1 or 2,
wherein the control/evaluation unit (14) reconfigures the individual function modules (5, 6, 7, 8) or groups of function modules arranged in a measuring path (MP1, MP2, MP3) in a defined first zone of the logic module (11), and
wherein a microcontroller (13) is provided which, by comparing the data of individual function modules (5, 6) or groups of function modules with redundant or diverse function modules (5.1, 6.1) or groups of function modules, determines whether the function module (5, 6) or the group of function modules in the first zone (A) of the logic module works correctly or is faulty.

4. Device as claimed in Claim 3,
wherein, if an error is detected, the control/evaluation unit (14) once again reconfigures the faulty function module (5, 6) or the faulty group of function modules in the first zone (A) and compares the data with one another.

5. Field device as claimed in Claim 4,
wherein, if an error occurs again, the control/evaluation unit (14) loads a diverse function module (5, 6) or the group of diverse function modules in the first zone (A) of the logic module (11).

6. Field device as claimed in Claim 5,
wherein, if an error occurs repeatedly, the control/evaluation unit (14) locks the first zone (A) of the logic module (11) and reconfigures the corresponding function module (5, 6) or the corresponding group of function modules in a second zone (A') of the logic module (11) which is different from the first zone (A) of the logic module and compares the corresponding data with one another.

7. Field device as claimed in Claim 6,
wherein, if an error occurs repeatedly, the control/evaluation unit (14) displays a message to the effect that the function module (5, 6) or the group of function modules is working incorrectly and
wherein the control/evaluation unit (14) reconfigures a redundant and/or diverse function module (5', 6') in the second zone (A').

8. Field device as claimed in Claim 1,
wherein an analog sensor circuit (3) is assigned to the sensor (2) for outputting a raw measuring signal which represents the process variable to be determined or monitored, and
wherein the downstream control/evaluation unit (14) has the following function modules:
an analog/digital converter (4) which converts the analog raw measuring signal to a digital raw measuring signal
a processing unit (5, 6, 7) which is used for the redundant and/or diverse evaluation of the digital raw measuring signal, and
where applicable a communication circuit (8, 9) which is used to forward the evaluated measuring signal to a higher-order control unit (12).

9. Field device as claimed in Claim 2 and 8,
wherein the raw measuring signal is additionally supplied to the voter (7) and wherein, by comparing the ACTUAL data of the raw measuring signal with TARGET data that have been saved, the device determines whether the sensor (2) is working correctly or not.

10. Field device as claimed in one or more of the previous claims,
wherein a test microprocessor (13) is provided that provides a test signal or a test pattern for a function module (3.3) or a group of function modules (3.3) and, by comparing the ACTUAL response data to the test signal or the test pattern with TARGET response data that have been saved, the device checks the function of the function module (3.3) or the function of the group of function modules.

11. Field device as claimed in one or more of the previous claims,
wherein at least one function module, e.g. a control unit (17) which runs the control program for configuring the function modules, is permanently configured in a static zone (SB).

12. Field device as claimed in one or more of the Claims 1, 3, 5 and 6,
wherein the logic module (11) is a dynamically partially reconfigurable FPGA for the digital function modules (5, 6, 7, 8) and/or a dynamically reconfigurable FPAA for the analog function modules.

13. Field device as claimed in one or more of the Claims 1, 3, 5, 6 and 12,
wherein the logic module (11) has a wide number of logic cells in a hard-wired FPGA/standard ASIC structure, wherein the logic cells can be configured using configuration registers in such a way that they execute elementary logic functions, wherein a connecting matrix with many cells is provided via which various logical links of the logic cells can be configured in defined complex links using the configuration registers, and
wherein a second control unit is provided that partially dynamically configures the logic cells and the connecting matrix via an internal bus and via the configuration registers using a configuration bit-stream in such a way that the hard-wired FPGA/ASIC structure behaves from a functional perspective like a partly dynamically reconfigurable standard logic module.

## Revendications

1. Appareil de terrain (1) destiné à la détermination et/ou la surveillance d'une grandeur process dans l'automatisation des process, constitué d'un capteur (2), qui fonctionne d'après un principe de mesure défini, et d'une unité de contrôle / d'exploitation (14), qui traite et exploite les données de mesure livrées par le capteur (2) en fonction du standard de sécurité exigé dans l'application critique en terme de sécurité respective, le long d'au moins trois circuits de mesure (MP1, MP2, MP3) équivalents,
pour lequel les circuits de mesure (MP1, MP2, MP3) sont conçus avec des modules de fonction (5,6) dynamiquement reconfigurables, de façon redondante, diversitaire, ou redondante et diversitaire, l'unité de contrôle / d'exploitation (14) configurant les modules de fonction (5, 6) dans les circuits de mesure (MP1, MP2, MP3) en fonction de l'application critique en terme de sécurité définie, de telle manière que l'appareil de terrain (1) soit conçu en fonction du standard de sécurité exigé, l'unité de contrôle / d'exploitation (14) reconfigurant en série ou en parallèle, de façon partiellement dynamique ou entièrement dynamique, les modules de fonction (5, 6) pour un nombre impair de circuits de mesure (MP1, MP2, MP3) redondants et/ou diversitaires, ou redondants et diversitaires, l'unité de contrôle / d'exploitation (14) reconfigurant dans chacun des circuits de mesure (MP1, MP2, MP3) des modules de fonction (5, 6) basés sur un matériel numérique et/ou basés sur un matériel analogique et/ou basés sur un logiciel, au moins l'un des circuits de mesure étant doté d'au moins un module de fonction analogique, lequel module est conçu de façon à pouvoir être reconfiguré dynamiquement,
pour lequel l'unité de contrôle / d'exploitation (14) compare entre elles les données mises à disposition par ou dans les circuits de mesure (MP1, MP2, MP3),
et pour lequel l'unité de contrôle / d'exploitation (14) génère un message d'avertissement, indiquant qu'un canal de mesure fournit des données erronées lorsque sont mises à disposition sur le canal de mesure (MP1) défini des données, qui diffèrent des données des circuits de mesure (MP2, MP3) restants.

2. Appareil de terrain selon la revendication 1 ou 2,
pour lequel l'unité de contrôle / d'exploitation (14) se voit affecter un comparateur (7), qui compare les données correspondantes mises à disposition par ou dans les circuits de mesure (MP1, MP2, MP3) et, en cas d'écart, génère le message d'avertissement ou d'erreur.

3. Appareil de terrain selon la revendication 1 ou 2,
pour lequel l'unité de contrôle / d'exploitation (14) reconfigure les différents modules de fonction (5, 6, 7, 8) ou des groupes de modules de fonction disposés dans un circuit de mesure (MP1, MP2, MP3) dans une première zone définie du composant logique (11), et pour lequel est prévu un microcontrôleur (13) qui, en comparant les données de modules de fonction (5, 6) individuels ou de groupes de modules de fonction avec des modules de fonction (5, 6) ou groupes de modules de fonction redondants ou diversitaires, détermine si le module de fonction (5, 6) ou le groupe de modules de fonction fonctionne correctement ou non dans la première zone (A) du composant logique.

4. Appareil de terrain selon la revendication 3,
pour lequel l'unité de contrôle / d'exploitation (14) reconfigure une nouvelle fois, en cas d'erreur déterminée, le module de fonction (5, 6) défectueux ou le groupe défectueux de modules de fonction dans la première zone (A) et compare entre elles les données correspondantes.

5. Appareil de terrain selon la revendication 4,
pour lequel l'unité de contrôle / d'exploitation (14), en cas de nouvelle apparition d'une erreur, charge un module de fonction (5, 6) diversitaire ou le groupe de modules de fonction diversitaires dans la première zone (A) du composant logique (11).

6. Appareil de terrain selon la revendication 5,
pour lequel l'unité de contrôle / d'exploitation (14), en cas d'apparition supplémentaire d'une erreur, verrouille la première zone (A) du composant logique (11) et reconfigure le module de fonction (5, 6) correspondant ou le groupe de modules de fonction correspondant dans une deuxième zone (A') du composant logique (11), différente de la première zone (A) du composant logique (11), et compare entre elles les données correspondantes.

7. Appareil de terrain selon la revendication 6,
pour lequel l'unité de contrôle / d'exploitation (14), en cas d'apparition répétée d'une erreur, émet un message d'erreur indiquant que le module de fonction (5, 6) ou le groupe de modules de fonction fonctionne de façon erronée et
pour lequel l'unité de contrôle / d'exploitation (14) reconfigure un module de fonction redondant et/ou diversitaire (5', 6') dans la deuxième zone (A').

8. Appareil de terrain selon la revendication 1,
pour lequel le capteur (2) se voit attribuer un circuit de capteur analogique (3) destiné à la sortie d'un signal de mesure brut, lequel représente la grandeur process à déterminer ou à surveiller, et
pour lequel l'unité de contrôle / d'exploitation (14) couplée en aval comporte les modules de fonction suivants : un convertisseur analogique-numérique (4), qui convertit le signal de mesure brut analogique en un signal de mesure brut numérique,
une unité de traitement (5, 6, 7), qui sert à l'exploitation redondante et/ou diversitaire du signal de mesure brut numérique, et
le cas échéant, un circuit de communication (8, 9), qui sert à la transmission du signal de mesure exploité vers une unité de commande maître (12).

9. Appareil de terrain selon la revendication 2 et 8,
pour lequel le signal de mesure brut est acheminé en plus au comparateur (7) et pour lequel, au moyen d'une comparaison des données réelles du signal de mesure brut avec des données de consigne enregistrées de façon appropriée, on détermine si le capteur (2) fonctionne correctement ou non.

10. Appareil de terrain selon l'une ou plusieurs des revendications précédentes,
pour lequel est prévu un microprocesseur de test (13), qui émet un signal de test ou un échantillon de test sur un module de fonction (3.3) ou un groupe de modules de fonction et, par une comparaison des données de réponse réelles au signal de test ou à l'échantillon de test avec les données de réponse de consigne enregistrées de façon appropriée, contrôle le fonctionnement du module de fonction (3.3) ou le fonctionnement du groupe de modules de fonction.

11. Appareil de terrain selon l'une ou plusieurs des revendications précédentes,
pour lequel est configuré en permanence dans une zone statique (SB) au moins un module de fonction, par exemple une unité de commande (17), dans laquelle est exécuté le programme de commande destiné à la configuration des modules de fonction.

12. Appareil de terrain selon l'une ou plusieurs des revendications 1, 3, 5 et 6,
pour lequel il s'agit, concernant le composant logique (11), d'un FPGA partiellement reconfigurable de façon dynamique pour les modules de fonction (5, 6, 7, 8) numériques et/ou d'un FPAA reconfigurable de façon dynamique pour les modules de fonction analogiques.

13. Appareil de terrain selon l'une ou plusieurs des revendications 1, 3, 5, 6 et 12,
pour lequel le composant logique (11) comporte un grand nombre de cellules logiques dans une structure ASIC FPGA / standard câblée, les cellules logiques étant configurables au moyen de registres de configuration, de telle manière à ce qu'ils exécutent des fonctions logiques élémentaires,
pour lequel est prévue une matrice de fonctions avec un grand nombre de cellules logiques, par l'intermédiaire de laquelle différentes fonctions logiques des cellules logiques sont configurables en fonctions complexes définies au moyen des registres de configuration, et
pour lequel est prévue une deuxième unité de commande, qui configure de façon partiellement dynamique les cellules logiques et la matrice de fonctions par l'intermédiaire d'un bus interne et par l'intermédiaire des registres de configuration au moyen d'un train de bits de configuration, de telle manière que la structure FPGA / ASIC câblée se comporte d'un point de vue fonctionnel comme un composant logique standard reconfigurable de façon partiellement dynamique.
